# EUROPEAN PATENT APPLICATION

(11) **EP 1 703 088 A1**
(43) Date of publication of application: **20.09.2006**
(21) Application number: 06003226.5
(22) Date of filing: 17.02.2006
(51) Int. Cl.: F01L 1/344, F16D 1/104, F16D 3/52

(54) **Variable valve time control device**

(30) Priority: 15.03.2005 JP 2005072492; 07.07.2005 JP 2005198191
(71) Applicant: AISIN SEIKI KABUSHIKI KAISHA, Kariya-shi, Aichi-ken 448-8650 (JP)
(72) Inventor: Nakajima, Shigeru Intellectual Property Department, Kariya-shi Aichi-ken 448-8650 (JP); Nakamura, Motoo Intellectual Property Department, Kariya-shi Aichi-ken 448-8650 (JP); Kira, Naoki Intellectual Property Department, Kariya-shi Aichi-ken 448-8650 (JP)
(74) Representative: Kramer - Barske - Schmidtchen

(57) **Abstract**

A variable valve timing control device including a housing member (30), a rotor member (20), a vane (70) provided, a fluid pressure chamber (R0) divided into an advanced angle chamber (R1) and a retarded angle chamber (R2) by the vane, a lock mechanism for restricting or allowing a relative rotation between the housing member and the rotor member by a lock member (80), a fluid pressure circuit (11,12) for controlling an operation fluid to be supplied to or discharged from the advanced angle chamber, the retarded angle chamber, and the lock mechanism, and a plate (40) provided on the housing member and integrally rotating therewith characterized in that the variable valve timing control device further comprises an engaging groove (42) formed on the plate, and a contacting member (45) arranged in the engaging groove so as to rotate integrally with the plate and engaging with a coupling member (310).

## Description

### FIELD OF THE INVENTION

This invention generally relates to a variable valve timing control device. More particularly, the present invention pertains to a variable valve timing control device for controlling an opening and closing timing of an intake valve and an exhaust valve of an internal combustion engine.

### BACKGROUND

In recent years, a variable valve timing control device is assembled on one end of a camshaft so as to control an opening and closing timing of an intake valve and an exhaust valve in response to an operation state of an internal combustion engine. In addition, engine accessories such as a vacuum booster and a fuel pump, i.e. a driven unit, are also assembled on one end of the camshaft for the purposes of reducing an overall height of the engine.

As a power transmission system to the driven unit, JP2001-263025A discloses a driving unit for driving a fuel pump by a camshaft of an internal combustion engine as a driving shaft of the fuel pump is connected to one end of the camshaft by means of an Oldham's coupling. According to the driving unit disclosed, a pump-side coupling is arranged between a coupling member constituting the Oldham's coupling and the driving shaft of the fuel pump for the purposes of performing a power transmission to the driving shaft of the fuel pump.

However, since the pump-side coupling is arranged between the coupling member and the driving shaft of the fuel pump and fixed by a nut, the number of parts is increased and the assembly is thus complicated. In addition, the arrangement of the pump-side coupling may cause a long installation length of the driven unit. Thus, flexibility of installation of the driven unit may be decreased. Further, an entire length of the engine may be increased, which leads to a reduction of mounting flexibility of the engine.

Furthermore, a separate assembly of a variable valve timing control device and the driven unit on the camshaft may cause a complicated process and an increase of a size, which leads to a further reduction of mounting flexibility of the engine.

In order to solve the aforementioned problems, Japanese Patent Application No. 2003-305694 filed on March 24, 2005 discloses, for the purposes of achieving a reduction of entire length of a driving member and a simplified assembly, a variable valve timing control device in which an engaging groove engageable with a coupling member that is connected to a driven unit is formed on axially one end of a plate consisting of a housing member of the variable valve timing control device.

However, in view of abrasion resistance of the engaging groove, since iron sintered alloy having a high specific gravity is used for the plate, a rotational inertia force of the plate is increased, which may lead to deterioration of rotational responsiveness of the camshaft. In addition, since a rotational fluctuation of the camshaft is increased, adverse affect such as acceleration of abrasion of a bearing portion of the camshaft may occur.

Thus, a need exists for a variable valve timing control device in which a rotational inertia force of a plate can be reduced so as to enhance a rotational responsiveness of a camshaft and durability of a bearing portion of the camshaft.

### SUMMARY OF THE INVENTION

According to an aspect of the present invention, a variable valve timing control device including a housing member integrally rotating with one of a crankshaft and a camshaft of an internal combustion engine, a rotor member assembled on the housing member so as to rotate relative thereto and integrally rotating with the other one of the crankshaft and the camshaft, a vane provided on the rotor member so as to integrally rotate therewith, a fluid pressure chamber formed between the housing member and the rotor member and divided into an advanced angle chamber and a retarded angle chamber by the vane, a lock mechanism for restricting a relative rotation between the housing member and the rotor member by a lock member movably provided on the housing member to be inserted into a lock groove formed on the rotor member, and for allowing the relative rotation between the housing member and the rotor member by the lock member to be retracted from the lock groove, a fluid pressure circuit for controlling an operation fluid to be supplied to or discharged from the advanced angle chamber, the retarded angle chamber, and the lock mechanism, and a plate provided on an axially one end side of the housing member and integrally rotating with the housing member characterized in that the variable valve timing control device further comprises an engaging groove formed on an axially one end side of the plate, and a contacting member arranged in the engaging groove so as to rotate integrally with the plate and engaging with a coupling member so as to be assembled thereon.

According to the aforementioned invention, the coupling member of a driven unit is connected to the plate by means of the contacting member. Thus, consideration of abrasion resistance of the plate may not be required. Material used for the plate is selectable accordingly. Since the plate can be made of relatively lightweight material, the rotational inertia force of the plate may be reduced, thereby enhancing the rotational responsiveness of the camshaft and the durability of a bearing portion thereof.

### BRIEF DESCRIPTION OF THE DRAWINGS

The foregoing and additional features and characteristics of the present invention will become more apparent from the following detailed description considered with reference to the accompanying drawings, wherein:

Fig. 1 is a cross-sectional view of a variable valve timing control device according to a first embodiment;

Fig. 2 is a cross-sectional view taken along the line II-II of Fig. 1;

Fig. 3 is a front view viewed from a side of a front plate of the variable valve timing control device according to the first embodiment;

Fig. 4 is a cross-sectional view taken along the line IV-IV of Fig. 3;

Fig. 5 is a cross-sectional view of the variable valve timing control device according to a second embodiment;

Fig. 6 is a font view viewed from a side of the front plate of the variable valve timing control device according to the second embodiment;

Fig. 7 is a perspective view showing a shape of a positioning jig for the front plate;

Fig. 8 is a cross-sectional view showing a state in which the variable valve timing control device is set in the positioning jig for the front plate according to the second embodiment, and also taken along the line VIII-VIII of Fig. 9;

Fig. 9 is a cross-sectional view taken along the line IX-IX of Fig. 8;

Fig. 10 is a cross-sectional view showing a state in which the variable valve timing control device is set in a positioning jig according to another embodiment, and also taken along the line X-X of Fig. 11; and

Fig. 11 is a cross-sectional view taken along the line XI-XI of Fig. 10.

### DETAILED DESCRIPTION

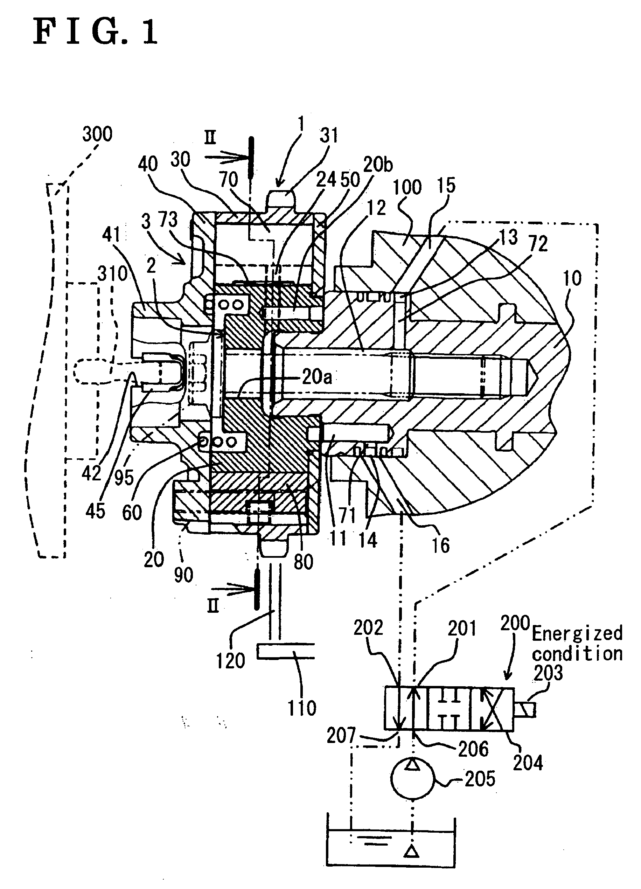

A first embodiment of the present invention is explained with reference to Figs. 1 to 4.

As shown in Figs. 1 to 4, a variable valve timing control device 1 includes a rotor member 2 for opening or closing a valve that consists of a camshaft 10 rotatably supported on a cylinder head 100 of an internal combustion engine and a rotor 20 integrally fixed to a tip end portion of the camshaft 10. The variable valve timing control device 1 also includes a housing member 3 that consists of a housing 30 being rotatable relative to the rotor 20 within a predetermined range, a front plate 40, and a rear plate 50. Then, a timing sprocket 31 is integrally formed on an outer periphery of the housing 30. Further, the variable valve timing control device 1 includes a torsion spring 60 disposed between the rotor 20 and the front plate 40, five vanes 70 assembled on the rotor 20, a lock key (lock member) 80 assembled on the housing 30, and the like. A vacuum pump (driven unit) 300 is connected to an axially one end (left side in Fig. 1) of the housing member 3 by means of a coupling member 310. A fuel pump instead of the vacuum pump may be used for the driven unit 300.

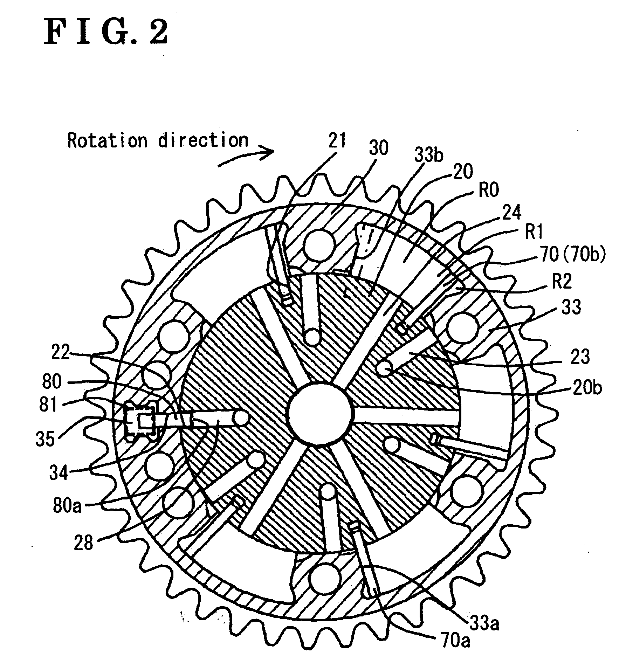

The timing sprocket 31 receives a rotation force in a clockwise direction thereof, which is shown as a rotation direction of the camshaft 10 in Fig. 2, from a crankshaft 110 through a crank sprocket (not shown) and a timing chain 120 as is a known structure. According to a structure of the present embodiment, the rotation force of the crankshaft 110 of the internal combustion engine is transmitted to the timing sprocket 31 of the housing 30 through the timing chain 120. However, the embodiment is not limited to the above structure. For example, a belt member instead of the timing chain 120 and a pulley instead of the timing sprocket 31 may be employed.

The camshaft 10 includes a known cam (not shown) for opening or closing an exhaust valve (not shown). A retarded angle fluid passage (fluid circuit) 11 and an advanced angle fluid passage (fluid circuit) 12 extending in an axial direction of the camshaft 10 are formed inside of the camshaft 10. The retarded angle fluid passage 11 is connected to a second connecting port 202 of a switching valve 200 through a passage 71 provided on the camshaft 10 in a radial direction thereof, an annular groove 14 provided on the camshaft, and a connecting passage 16 provided on the cylinder head 100. In addition, the advanced angle fluid passage 12 is connected to a first connecting port 201 of the switching valve 200 through a passage 72 provided on the camshaft 10 in the radial direction thereof, an annular groove 13 provided on the camshaft 10, and a connecting passage 15 provided on the cylinder head 100.

The switching valve 200 has a known structure in which a spool 204 is moved against a biasing force of a spring (not shown) by energizing a solenoid 203. When the solenoid 203 is energized, as shown in Fig. 1, a supply port 206 connected to an oil pump 205 that is driven by the internal combustion engine communicates with the first connecting port 201. At the same time, the second connecting port 202 communicates with a discharge port 207. When the solenoid 203 is de-energized, the supply port 206 communicates with the second connecting port 202, and at the same time, the first connecting port 201 communicates with the discharge port 207. Therefore, in cases where the solenoid 203 of the switching valve 200 is energized, operation fluid (fluid pressure) is supplied to the advanced angle fluid passage 12. On the other hand, in cases where the solenoid 203 is de-energized, operation fluid is supplied to the retarded angle fluid passage 11. Energization of the solenoid 203 of the switching valve 200 is duty-controlled by which a ratio of energization/de-energization per unit time can be changed. For example, when the switching valve 200 is duty-controlled at 50%, the first and second connecting ports 201 and 202, and the supply and discharge ports 206 and 207 do not communicate with each other at all.

The rotor 20 is integrally fixed to the camshaft 10 with a single installation bolt 95 that penetrates through a through-hole 20a formed on an axial center of the rotor 20 for the purposes of forming the rotor member 2. A front end (i.e. left side in Fig. 1) of the through-hole 20a is covered by the installation bolt 95. As shown in Fig. 2, five vane grooves 21 and a lock groove 22 are formed on the rotor 20. The five vanes 70 are positioned in the respective vane grooves 21 so as to be movable in the radial direction. In addition, as shown in Fig. 1, a vane spring 73 is disposed between a bottom portion of each vane groove 21 and a bottom face of each vane 70 so that the vane 70 is biased in a radially outward direction and slides on a sliding face of the housing 30. Further, as shown in Figs. 1 and 2, the lock key 80 is provided at the lock groove 22 such that a predetermined amount of the lock key 80 is received in the lock groove 22 in cases where positions of the camshaft 10 and the rotor 20, and the housing 30 are synchronized at a predetermined phase (i.e. most advanced angle position). The rotor 20 includes five retarded angle fluid passage 23 and five advanced angle fluid passages 24 extending in the radial direction. Each retarded angle fluid passage 23 is connected to the retarded angle fluid passage 11 through a retarded angle fluid passage 20b formed in the axial direction. Each advanced angle fluid passage 24 is connected to the advanced angle fluid passage 72 through the advanced angle fluid passage 12.

The housing member 3 is constituted such that one side of the housing 30 in the axial direction thereof is integrally fixed to the front plate 40 while the other side of the housing 30 in the axial direction there of is integrally fixed to the rear plate 50. The housing 30, the front plate 40, and the rear plate 50 are connected with six connecting bolts 90. The housing 30 is assembled on an outer periphery of the rotor 20 so as to be roatable relative thereto within a predetermined angle range. The vacuum pump 300 is connected to an axially one end (left side in Fig. 1) of the housing member 3 by means of the coupling member 310.

The timing sprocket 31 is integrally formed on the outer periphery of the housing 30. Five protruding portions 33 are formed on an inner periphery of the housing 30. An inner peripheral face of each protruding portion 33 is slidably in contact with an outer peripheral face of the rotor 20. That is, the housing 30 is rotatably supported on the rotor 20. A retracting groove 34 for accommodating the lock key 80, and a receiving hole 35 connected to the retracting groove 34 for accommodating a coil spring 81 that biases the lock key 80 in the radially inward direction of the housing 30 are formed on one of the protruding portions 33.

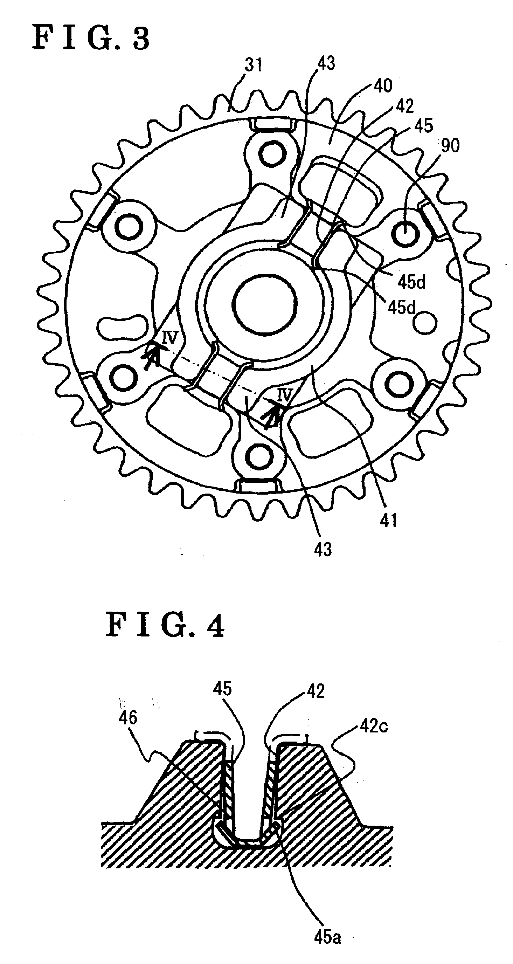

A cylindrical portion 41 having a substantially cylindrical shape is formed on axially one end side of the front plate 40 as shown in Fig. 1. An engaging groove 42 engaging with the coupling member 310 that is connected to the vacuum pump 300 is formed on the cylindrical portion 41. The engaging groove 42 extends in the axial direction of the cylindrical portion 41 and penetrates in the radial direction thereof. Further, in order to bring the engaging groove 42 to extend in the radial direction, a projecting portion 43 projecting in the radial direction is formed on the cylindrical portion 41 as shown in Fig. 3. As shown in Fig. 4, the engaging groove 42 is of a stepped shape having a stepped portion 42c. A diameter of a bottom portion of the engaging groove 42 formed on a wall side thereof (i.e. axially one end side) is larger than that of an opening portion of the engaging groove 42 formed on an opening side thereof (i.e. axially the other end side).

As shown in Fig. 4, a clip (contacting member) 45 having a U-shape in cross section engages with the engaging groove 42 so that the clip 45 rotates with the front plate 40 as a unit. The clip 45 is made of stainless spring steel, for example. The front plate 40 is made of light alloy, for example. The coupling member 310 connected to the vacuum pump 300 engages with the clip 45 so as to be assembled thereon.

The clip 45 has a tapered shape whose width is gradually decreased towards a bottom portion from an opening side, and forms a tapered gap 46 with the engaging groove 42. A width of the tapered gap 46 is gradually increased towards the bottom portion thereof. Further, a hook portion 45a is formed on the clip 45 in such a manner that respective side portions of the clip 45 provided on the bottom side thereof are expanded as shown in Fig. 4. The hook portion 45a is engageable with the stepped portion 42c of the engaging groove 42. An axial movement of the clip 45 is restricted by the engagement between the hook portion 45a and the stepped portion 42c. As shown in Fig. 3, bent portions (retaining portions) 45d are formed on both radially end portions of the clip 45 so that a width between the bent portions 45d facing each other in the circumferential direction of the cylindrical portion 41 becomes larger than that of the engaging groove 42. Each bent portion 45d is caught by, i.e. closely made contact with, an end face of the engaging groove 42 so as to restrict a radial movement of the clip 45.

Each vane 70 divides a fluid pressure chamber R0, which is formed between the housing 30 and the rotor 20 and also between the protruding portions 33 adjacent to each other in the circumferential direction, into an advanced angle chamber R1 and a retarded angle chamber R2. The relative rotation between the rotor 20 and the housing 30 on the most advanced angle side is restricted at a position where the vane 70, i.e. a vane 70a in Fig. 2, is made contact with one side face 33a of the protruding portion 33 in the circumferential direction. Meanwhile, the relative rotation between the rotor 20 and the housing 30 on the most retarded angle side is restricted at a position where the vane 70, i.e. a vane 70b in Fig. 2, is made contact with the other side face 33b of the protruding portion 33 in the circumferential direction. On the advanced angle side, the lock key 80 is positioned within the lock groove 22 so as to restrict the relative rotation between the rotor 20 and the housing 30.

One end of the torsion spring 60 engages with the front plate 40 while the other end engages with the rotor 20. The torsion spring 60 biases the inner rotor 20 towards the advanced angle side (clockwise direction in Fig. 2) relative to the housing 30, the front plate 40 and the rear plate 50. Thus, the operation responsiveness of the rotor 20 to the advanced angle side may be enhanced.

According to the present embodiment, as shown in Fig. 4, an axial length of the clip 45 is shorter than that of the engaging groove 42. In this case, however, the axial length of the clip 45 may extend so that the axial end thereof on the opening side reaches that of the engaging groove 42. Then, since the vacuum pump 300 is assembled on the engaging groove 42 of the front plate 40 by means of the coupling member 310, the coupling member 310 may be easily inserted into the opening portion of the clip 45 having an expanded open shape.

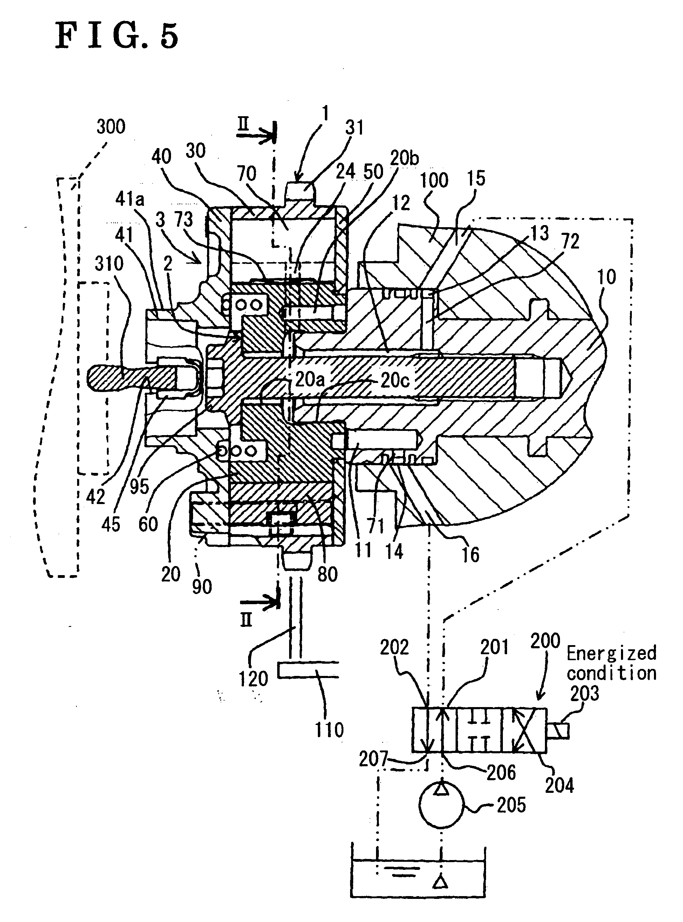

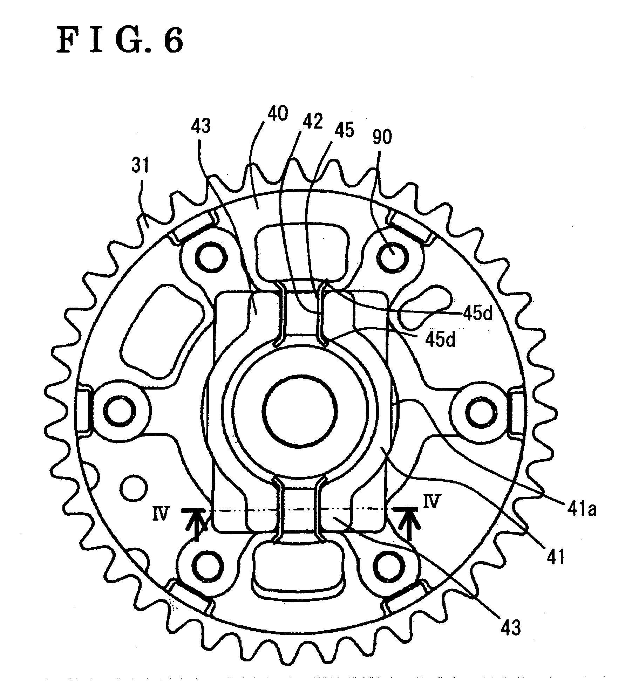

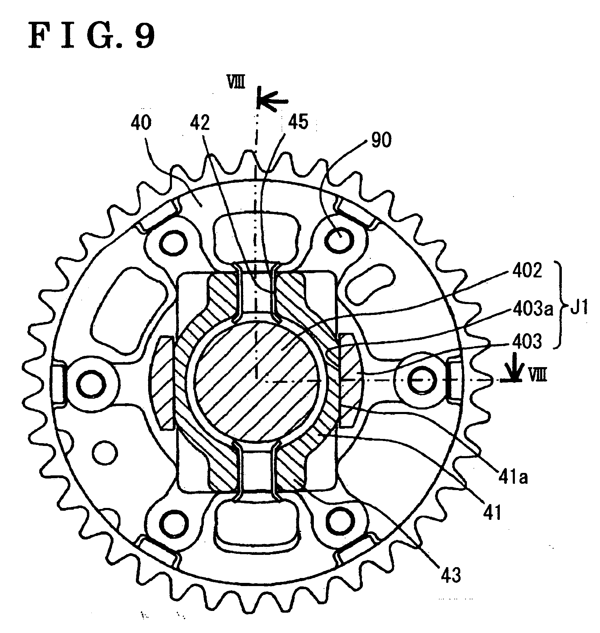

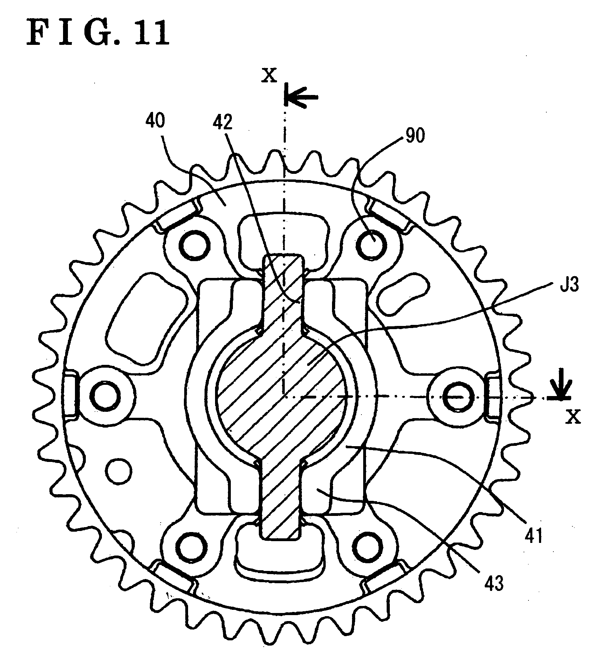

Next, a second embodiment is explained with reference to Figs. 5 to 11. Fig. 5 is a longitudinal sectional view of the variable valve timing control device 1 according to the second embodiment. The second embodiment only differs from the first embodiment in that plane portions 41 a are formed on respective sides of the cylindrical portion 41 so as to axially extend from one end side thereof and to be in parallel with the engaging groove 42 and the rotational axis of the front plate 40. The other structure of the second embodiment is same as that of the first embodiment and thus explanation for the identical structure is omitted. In addition, Fig. 2 shows a cross-sectional view taken along the line II-II of Fig. 5.

According to the variable valve timing control device 1 of the second embodiment, the cylindrical portion 41 having a substantially cylindrical shape and on which the engaging groove 42 engaging with the coupling member 310 connected to the vacuum pump 300 is formed on one end side of the front plate 40. Then, the plane portions 41 a are formed on the respective sides of the cylindrical portion 41 such that the plane portions 41 a are in parallel with the engaging groove 42 and the rotational axis of the front plate 40.

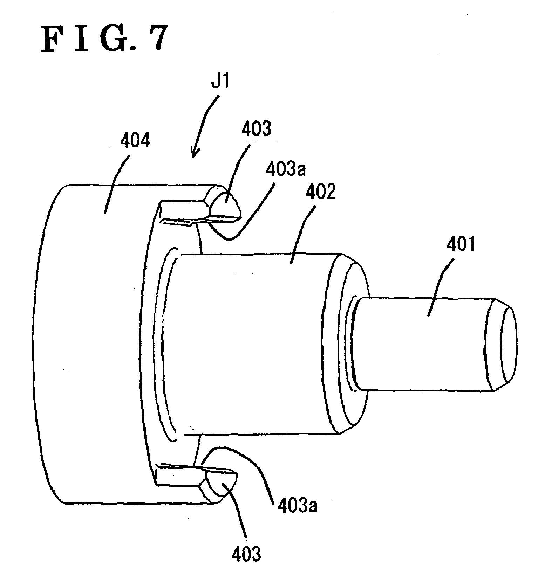

Fig. 7 is a perspective view showing a shape of a positioning jig J1 for the front plate 40. The jig J1 having a substantially column-shape includes a three-stepped concentric shaft that consists of a small diameter shaft portion 401, a middle diameter shaft portion 402, and a large diameter shaft portion 404 in order from a tip end portion. Protruding portions 403 are formed, facing each other across the engaging groove 42, on axial planes of the large diameter shaft portion 404. Then, plane portions 403a are formed on an axially inner side of the respective protruding portions 403.

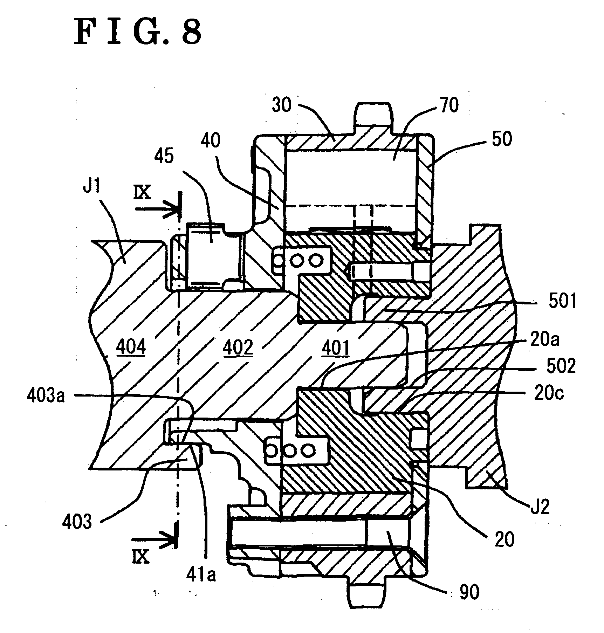

Fig. 8 is a cross-sectional view showing a state in which the variable valve timing control device 1 is set in the positioning jig J1. As shown in Fig. 8, each plane portion 403a of the jig J1 is formed such that the plane portion 403a is closely in contact with the plane portion 41 a of the front plate 40 in parallel with the engaging groove 42. An outer diameter of the middle diameter shaft portion 402 is defined such that a predetermined gap is formed between an outer peripheral side of the middle diameter shaft portion 402 and a center bore of the front plate 40. In addition, an outer diameter of the small diameter shaft portion 401 is defined such that a predetermined gap is formed between an outer peripheral side of the small diameter shaft portion 401 and the through-hole 20a of the rotor 20.

An assembly method of the variable valve timing control device 1 according to the second embodiment is explained below.

As shown in Figs 2, 8 and 9, integrated components of the housing 30 such as the rotor 20 and the vanes 70 are first assembled on the housing 30. Then, the rear plate 50, and the front plate 40 in which the clip 45 is attached to the engaging groove 42 beforehand are temporarily assembled with the bolts 90.

Next, a positioning jig J2 for the rotor 20 having a shaft portion 501 closely made contact with a center bore 20c of the rotor 20 is inserted into the center bore 20c. The jig J2 includes a center bore 502 having a diameter specified such that the center bore 502 is closely made contact with the small diameter shaft portion 401 of the jig J1.

The small diameter shaft portion 401 of the jig J 1 is inserted from a side of the front plate 40 into the center bore 502 of the jig J2 while the plane portions 403a of the jig J1 and the plane portions 41a of the front plate 40 are closely made contact with each other. Then, the front plate 40 and the rear plate 50 are fully tightened by the bolts 90. A desired accuracy of eccentricity between the center bore 20c of the rotor 20 and the engaging groove 42 can be obtained. As a result, an eccentric error between a center line of the engaging groove 42 and an axial center of the camshaft 10 as a driving shaft may be reduced, which can prevent increase of rotational fluctuation or noise occurrence.

Further, by the assembly of the clip 45 on the front plate 40 beforehand, foreign substance such as metal powder that may be generated at a time of assembly of the clip 45 on the front plate 40 is prevented from being mixed into the variable valve timing control device 1.

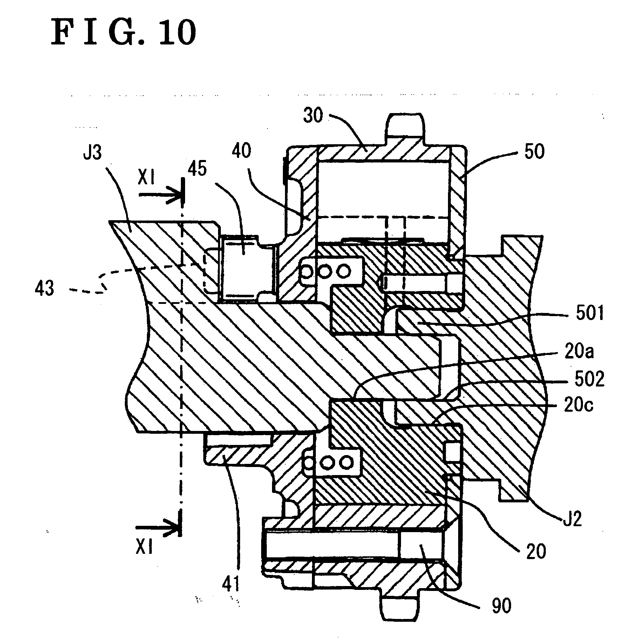

According to the second embodiment, the plane portions 41 a in parallel with the engaging groove 42 are formed on the respective sides of the cylindrical portion 41 formed on one end of the front plate 40, and then the jig J1 having the planes, i.e. the plane portions 403a, closely made contact with the plane portions 41a are used. At this time, alternatively, after the clip 45 is assembled on the engaging groove 42 whose axial length is longer than that of the clip 45, a jig J3 having a protruding portion that is closely made contact with an axially end side of the engaging groove 42 may be used for assembly as shown in Fig. 10. In this case, the same effects as the case where the plane portions 41 a are employed can be obtained.

An operation of the variable valve timing control device 1 having the aforementioned structure is explained below. When the internal combustion engine is stopped, the oil pump 205 is stopped and also the switching valve 200 is not energized. Thus, the operation fluid is not supplied to the fluid pressure chambers R0. At this time, as shown in Fig. 2, the lock key 80 is positioned within the lock groove 22 of the rotor 20 and thus the relative rotation between the rotor 20 and the housing 30 is restricted. Even when the internal combustion engine is started and the oil pump 205 is driven, the operation fluid supplied from the oil pump 205 is only virtually provided to the advanced angle chamber R1 through the connecting passage 15, and the advanced angle fluid passages 12 and 24 while the duty ratio is small for energizing the switching valve 200 (i.e. the ratio of energizing time relative to the de-energizing time per unit time is small). Therefore, the variable valve timing control device 1 is maintained in a locked state.

When the retarded angle phase is required for the valve timing depending on the operation condition of the internal combustion engine, the duty ratio for energizing the switching valve 200 is brought to be large and then the position of the spool 204 is switched. The operation fluid supplied from the oil pump 205 is provided to the retarded angle chamber R2 by passing through the connecting passage 16, and the retarded angle fluid passages 11, 20b and 23. At the same time, the operation fluid is supplied to the lock groove 22 through a lock fluid passage 28 and then led to a head portion 80a of the lock key 80. Therefore, fluid pressure is applied to the head portion 80a of the lock key 80 so that the lock key 80 is retracted from the lock groove 22. The relative rotation between the housing 30 and the rotor 20 is permitted accordingly. Meanwhile, the operation fluid stored in the advanced angle chamber R1 is sent to the advanced angle fluid passages 24 and 12, and the connecting passage 15 to be discharged from the discharge port 207 of the switching valve 200. The rotor 20 is rotated relative to the housing 30 in the retarded angle direction accordingly. The side face 33b of the protruding portion 33 of the housing 30 and the side face of the vane 70b are made contact with each other so as to restrict the rotation of the rotor 20 relative to the housing 30 in the advanced angle direction.

When the advanced angle phase is required for the valve timing depending on the operation condition of the internal combustion engine, the duty ratio for energizing the switching valve 200 is brought to be small and then the position of the spool 204 is switched. The operation fluid supplied from the oil pump 205 is provided to the advanced angle chamber R1 by passing through the connecting passage 15, and the advanced angle fluid passages 12 and 24. Meanwhile, the operation fluid stored in the retarded angle chamber R2 is sent to the retarded angle fluid passages 23 and 11, and the connecting passage 16 to be discharged from the discharge port 207 of the switching valve 200. The rotor 20 is rotated relative to the housing 30 in the advanced angle direction accordingly. The side face 33a of the protruding portion 33 of the housing 30 and the side face of the vane 70a are made contact with each other so as to restrict the rotation of the rotor 20 relative to the housing 30 in the retarded angle direction. When the operation fluid is discharged from the lock groove 22, the lock key 80 movably arranged on the housing 30 is inserted into the lock groove 22, thereby restricting the relative rotation between the housing 30 and the rotor 20.

During the operation of the combustion engine, the vacuum pump 300 is rotatably driven by the coupling member 30, which engages with the engaging groove 42 of the front plate 40 by means of the clip 45. At this time, a relative sliding is possibly generated between the clip 45 and the coupling member 310 because of a positional difference between a rotation center of the vacuum pump 300 and that of the front plate 40. However, the bent portions 45d formed on both radially end portions of the clip 45 are caught by the end faces of the engaging groove 42, and thus the clip 45 is prevented from moving. Further, a hitting sound generated between the coupling member 310 and the engaging grove 42 upon rotation fluctuation of the camshaft 10 is absorbed by the tapered gap 46 formed between the engaging groove 42 and the clip 45. The operation noise of the variable valve timing control device 1 can be thus reduced.

According to the aforementioned embodiments, the rotational fluctuation of the camshaft 10 may be reduced to thereby enhance the durability of a bearing portion of the camshaft 10.

Furthermore, according to the aforementioned embodiments, the clip 45 may be formed easily and at a low cost, such as by press molding. In addition, a pressing direction of the clip 45 can be arranged on the engaging groove 42 side, which may cause an edge portion formed at a time of pressing of the clip 45 to enter into a side face of the engaging groove 42 so as to prevent the clip 45 from disengaging from the engaging groove 42.

Furthermore, according to the aforementioned embodiments, the clip 45 is made of stainless spring steel, for example. Thus, rust is not generated upon shipment and rust prevention is not required.

Furthermore, according to the aforementioned embodiments, the plane portions 41 a are formed on the front plate 40 so as to be parallel with the rotational axis thereof. Thus, the front plate 40 can be assembled on the basis of the plane portions 41 a. The eccentric error between the center line of the engaging groove 42 and the axial center of the camshaft 10 can be reduced and also the engaging groove 42 is prevented from being damaged upon assembly. Accordingly, a smooth rotation of the camshaft 10 and reduction of the operation noise of the variable valve timing control device 1 can be achieved, which may contribute to a long lifetime of the coupling member 310.

Furthermore, according to the aforementioned embodiments, the plane portions 41a are in parallel with the engaging groove 42. Thus, the eccentric error between the center line of the engaging groove 42 and the axial center of the camshaft 10 may be further reduced. It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A variable valve timing control device (1) comprising a housing member (30) integrally rotating with one of a crankshaft (110) and a camshaft (10) of an internal combustion engine, a rotor member (20) assembled on the housing member so as to rotate relative thereto and integrally rotating with the other one of the crankshaft and the camshaft, a vane (70) provided on the rotor member so as to integrally rotate therewith, a fluid pressure chamber (R0) formed between the housing member and the rotor member and divided into an advanced angle chamber (R1) and a retarded angle chamber (R2) by the vane, a lock mechanism for restricting a relative rotation between the housing member and the rotor member by a lock member (80) movably provided on the housing member to be inserted into a lock groove (22) formed on the rotor member, and for allowing the relative rotation between the housing member and the rotor member by the lock member to be retracted from the lock groove, a fluid pressure circuit (11,12) for controlling an operation fluid to be supplied to or discharged from the advanced angle chamber, the retarded angle chamber, and the lock mechanism, and a plate (40) provided on an axially one end side of the housing member and integrally rotating with the housing member **characterized in that** the variable valve timing control device further comprises an engaging groove (42) formed on an axially one end side of the plate, and a contacting member (45) arranged in the engaging groove so as to rotate integrally with the plate and engaging with a coupling member (310) so as to be assembled thereon.

2. A variable valve timing control device (1) according to claim 1, wherein the plate (40) is made of a light alloy.

3. A variable valve timing control device (1) according to claim 1 or 2, wherein the contacting member (45) is formed by a press molding.

4. A variable valve timing control device (1) according to anyone of the preceding claims, wherein the engaging groove (42) includes a retaining portion (42c) for restricting an axial movement of the contacting member (45).

5. A variable valve timing control device (1) according to anyone of the preceding claims, wherein the contacting member (45) includes a retaining portion (45d) for preventing a disengagement of the contacting member from the engaging groove (42).

6. A variable valve timing control device (1) according to anyone of the preceding claims, wherein the engaging groove (42) and the contacting member (45) form a tapered gap (46) therebetween.

7. A variable valve timing control device (1) according to claim 2, wherein the contacting member (45) is made of stainless spring steel.

8. A variable valve timing control device (1) according to anyone of the preceding claims, wherein the plate (40) includes a plane portion (41 a) in parallel with a rotational axis of the plate.

9. A variable valve timing control device (1) according to claim 8, wherein the plane portion (41a) is in parallel with the engaging groove (42).
